# EUROPEAN PATENT APPLICATION

(11) **EP 4 588 716 A1**
(43) Date of publication of application: **23.07.2025**
(21) Application number: 23893112.5
(22) Date of filing: 25.06.2023
(51) Int. Cl.: B60N 2/28

(54) **STRUCTURE CAPABLE OF ADJUSTING ROTATION OF ROTATING DISK BY SINGLE HAND AND CHILD SAFETY SEAT**

(30) Priority: 25.11.2022 CN 202223143136 U
(71) Applicant: Ningbo Baby First Baby Products Co., Ltd., Ningbo, Zhejiang 315400 (CN)
(72) Inventor: ZHOU, Xiaolin, Ningbo, Zhejiang 315400 (CN)
(74) Representative: Ipside
(86) International application number: PCT/CN2023/102018
(87) International publication number: WO 2024/109012

(57) **Abstract**

A structure capable of adjusting rotation of a rotating disk with one hand and a child safety seat. The structure comprises a base (1) and a rotating disk (2) rotatably connected to each other. A seat back (5) is mounted on the rotating disk (2); an adjustment handle (6) is connected to the seat back (5); a rotation adjustment assembly (9) is mounted on the rotating disk (2); the rotation adjustment assembly (9) comprises a pull wire (91), a first rotating block (92), a second rotating block (93), a first rotating gear block (94), and a second rotating gear block (95); the base (1) is provided with a plurality of positioning gear slots; the first rotating block (92) is hingedly connected to the first rotating gear block (94); the second rotating block (93) is hingedly connected to the second rotating gear block (95); the first rotating block (92) is hingedly connected to the second rotating block (93); a position where the first rotating block (92) is hingedly connected to the second rotating block (93) is connected to the pull wire; the pull wire is connected to the adjustment handle (6); when the adjustment handle (6) is pulled and the pull wire is driven to move with one hand, the first rotating gear block (94) and the second rotating gear block (95) are driven to detach from the positioning gear slots, respectively; the one hand continues to apply a rotational force to the adjustment handle (6) so as to drive the seat back to rotate. The operation is convenient, and the structure is simple, stable and reliable.

## Description

### Technical Field

The present invention relates to the technical field of automotive safety products, and in particular to a structure capable of adjusting rotation of a rotating disk with one hand and a child safety seat.

### Background Art

In the existing rotating child safety seat, the seat back is mounted on a rotating disk, and the seat back is rotated by rotating the rotating disk relative to the base. However, the operation of releasing the lock and rotating the rotating disk generally requires two hands to complete, one hand being used to release the lock and the other hand being used to push the seat back to rotate, making it inconvenient to operate.

### Summary of the Invention

In order to solve at least one aspect of the above problems, the present invention first provides a structure capable of adjusting rotation of a rotating disk with one hand, including a base and a rotating disk rotatably connected to each other, a seat back is mounted on the rotating disk, an adjustment handle is movably connected to the seat back, a rotation adjustment assembly is mounted on the rotating disk, and the rotation adjustment assembly includes a pull wire, a first rotating block, a second rotating block, a first rotating gear block and a second rotating gear block, the base is provided with a plurality of positioning gear slots adapted for cooperating with the first rotating gear block and the second rotating gear block, an end of the first rotating block is hingedly connected to the first rotating gear block, and an end of the second rotating block is hingedly connected to the second rotating gear block, the other end of the first rotating block is hingedly connected to the other end of the second rotating block, a position where the first rotating block is hingedly connected to the second rotating block is connected to an end of the pull wire, and the other end of the pull wire is connected to the adjustment handle; when the adjustment handle is pulled and the pull wire is driven to move with one hand, the end of the first rotating block and the end of the second rotating block approach each other to drive the first rotating gear block and the second rotating gear block to disengage from the positioning gear slots respectively, and the seat back is driven to rotate when the single hand continues to apply a rotational force to the adjustment handle.

Optionally, the first rotating block and the second rotating block are both L-shaped structures.

Optionally, the rotation adjustment assembly further includes one first locking shaft and two second locking shafts, the first rotating block is provided with a first slotted hole, the second rotating block is provided with a second slotted hole, and the first slotted hole and is hingedly connected to the second slotted hole through the first locking shaft; the first rotating gear block is provided with a third slotted hole, the second rotating gear block is provided with a fourth slotted hole, the third slotted hole is hingedly connected to the first rotating block through one of the two second locking shafts, and the fourth slotted hole is hingedly connected to the second rotating block through the other one of the two second locking shafts.

Optionally, the rotating disk is provided with a sliding groove slidably connected to the first rotating gear block and the second rotating gear block, a first elastic member is mounted in the sliding groove, and two ends of the first elastic member are respectively connected to the first rotating gear block and the second rotating gear block.

Optionally, the first rotating gear block is provided with a fifth slotted hole, the second rotating gear block is provided with a sixth slotted hole, the rotation adjustment assembly further includes two screws in sliding engagement with the fifth slotted hole and the sixth slotted hole respectively, and the first rotating gear block and the second rotating gear block are respectively connected to the rotating disk through the screws.

Optionally, further provided are slide rail fixed plates connected to the rotating disk and a handle fixing base connected to the seat back, the seat back is slidably connected to the slide rail fixed plates, the adjustment handle is movably connected to the handle fixing base, the handle fixing base is mounted with an angle adjustment assembly for locking or unlocking a relative angular position between the seat back and the slide rail fixed plates, the angle adjustment assembly is respectively connected to the adjustment handle and the slide rail fixed plates, and the adjustment handle moves relative to the handle fixing base to drive the angle adjustment assembly to lock or unlock the relative angular position between the seat back and the slide rail fixed plates.

Optionally, the angle adjustment assembly includes a first gear pin and a second gear pin mounted on the handle fixing base, the first gear pin is provided with a first vertical rod, the second gear pin is provided with a second vertical rod, the adjustment handle is provided with a first inclined groove in sliding engagement with the first vertical rod and a second inclined groove in sliding engagement with the second vertical rod, and the slide rail fixed plate is provided with a plurality of gear holes that are respectively adapted for cooperating with the first gear pin and the second gear pin.

Optionally, the angle adjustment assembly includes a second elastic member, and two ends of the second elastic member are respectively connected to the first gear pin and the second gear pin.

Optionally, the seat back is connected with sliding shaft(s), and the slide rail fixed plates are provided with arc-shaped slide rails slidably connected to the sliding shaft(s).

Compared with the existing technology, the structure capable of adjusting rotation of a rotating disk with one hand in the present invention utilizes the first rotating gear block and the second rotating gear block to cooperate with the positioning gear slots to lock the relative position between the seat back and the base, and the adjustment handle connected with the pull wire is provided on the seat back, the pull wire is connected with the first rotating block for driving the first rotating gear block to move and the second rotating block for driving the second rotating gear block to move, when the operator pulls the adjustment handle with one hand, the pull wire moves to eventually drive the first rotating gear block and the second rotating gear block to disengage from the positioning gear slots, thereby realizing the unlocking of the seat back rotation function, and the operator can continue to apply a rotational force on the adjustment handle with the hand to drive the seat back to rotate relative to the base. This method allows the operator to unlock and rotate the seat back with one single hand, resulting in an easy operation and a simple structure which is stable and reliable.

Furthermore, the present invention provides a child safety seat, including the above-mentioned structure capable of adjusting rotation of a rotating disk with one hand.

Compared with the existing technology, the child safety seat in the present invention has the same advantages with the above-mentioned structure capable of adjusting rotation of a rotating disk with one hand, which will not be repeated herein.

### Brief Description of the Drawings

FIG. 1 is a first partial exploded view of a child safety seat according to an embodiment of the present invention;
FIG. 2 is a second partial exploded view of the child safety seat according to the embodiment of the present invention;
FIG. 3 is a partial structural view of the child safety seat in a locked state according to the embodiment of the present invention;
FIG. 4 is an enlarged view of area A in FIG. 3;
FIG. 5 is a partial structural view of the child safety seat according to the embodiment of the present invention when the rotating disk is unlocked and rotated;
FIG. 6 is an enlarged view of area B in FIG. 5;
FIG. 7 is a cross -sectional view of the child safety seat in a locked state according to the embodiment of the present invention;
FIG. 8 is an enlarged view of area C in FIG. 7;
FIG. 9 is a cross -sectional view of the child safety seat according to the embodiment of the present invention when the seat back angle adjustment is unlocked;
FIG. 10 is an enlarged view of area D in FIG. 9;
FIG. 11 is a structural view of the assembly of the angle adjustment assembly, the adjustment handle and the handle fixing base according to the embodiment of the present invention when the seat back angle is locked; and
FIG. 12 is a structural view of the assembly of the angle adjustment assembly, the adjustment handle, and the handle fixing base according to the embodiment of the present invention when the seat back angle is unlocked.

Reference signs are as follows:
1, base; 11, positioning gear slot; 2, rotating disk; 21, sliding groove; 3, slide rail fixed plate; 31, gear hole; 32, arc-shaped slide rail; 4, sliding shaft; 5, seat back; 6, adjustment handle; 61, first inclined slot; 62, second inclined slot; 7, handle fixing base; 8, angle adjustment assembly; 81, first gear pin; 811, first vertical rod; 82, second gear pin; 821, second vertical rod; 83, second elastic member; 9, rotation adjustment assembly; 91, pull wire; 92, first rotating block; 921, first slotted hole; 93, second rotating block; 931, second slotted hole; 94, first rotating gear block; 941, third slotted hole; 942, fifth slotted hole; 95, second rotating gear block; 951, fourth slotted hole; 952, sixth slotted hole; 96, screw; 97, first locking shaft; 98, second locking shaft; and 99, first elastic member.

### Detailed Description of Embodiments

In order to make the above-mentioned objects, features and advantages of the present invention clearer and easier to understand, the specific embodiments of the present invention are described in detail below with reference to the accompanying drawings.

In the description of the present invention, it is to be understood that the orientation or position relationship indicated by terms such as "upper" and "lower" is based on the orientation or position relationship when the product is normally operated.

Terms "first" and "second" are used for descriptive purposes only and should not be understood as indicating or implying relative importance or implicitly indicating the number of the indicated technical features. Therefore, the features defined as "first" and "second" may explicitly or implicitly include at least one of the features.

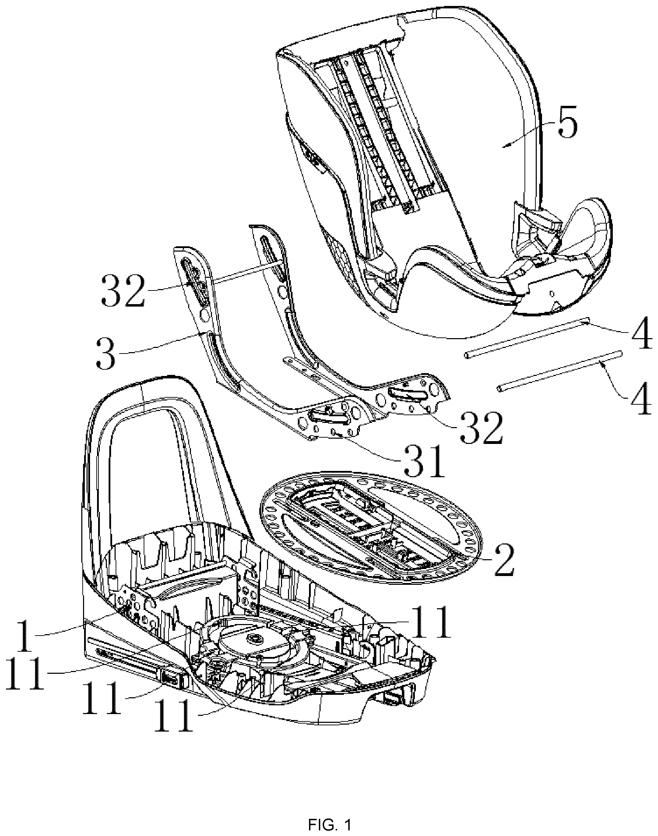

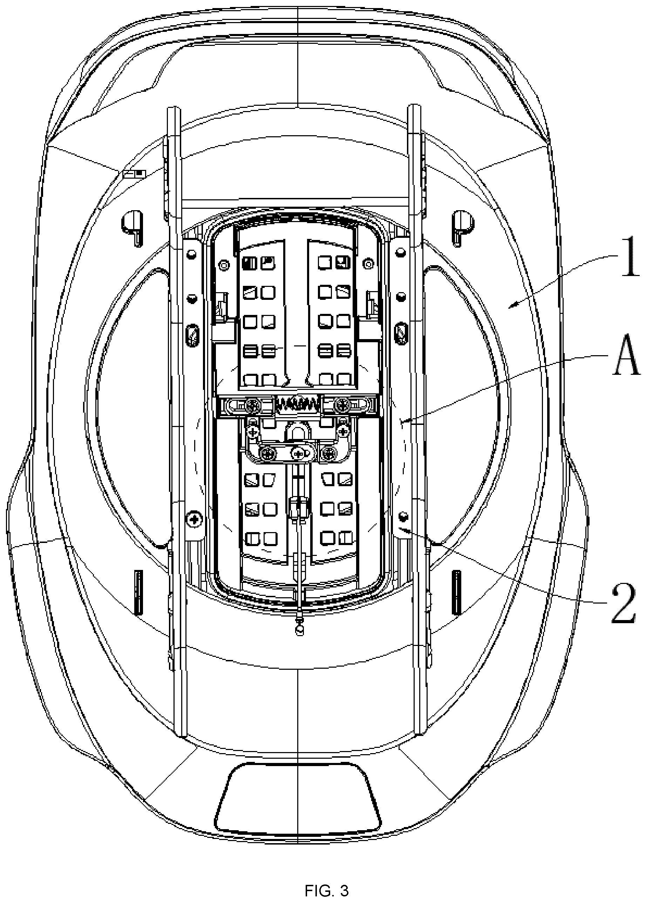

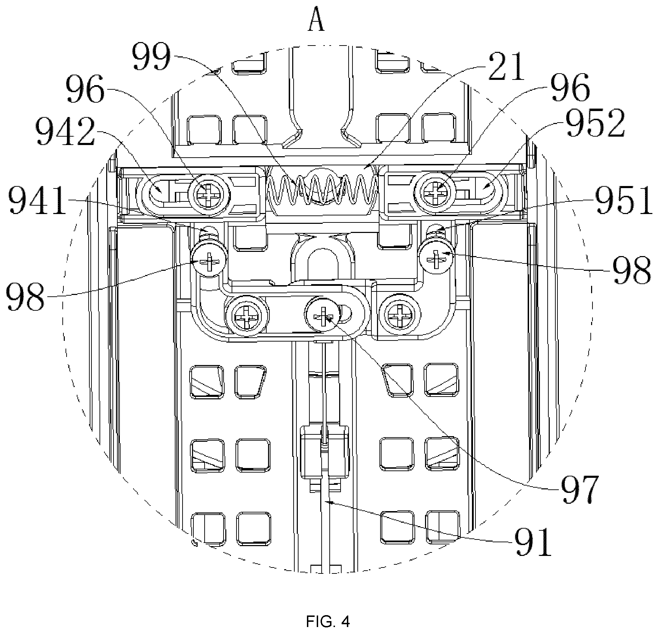

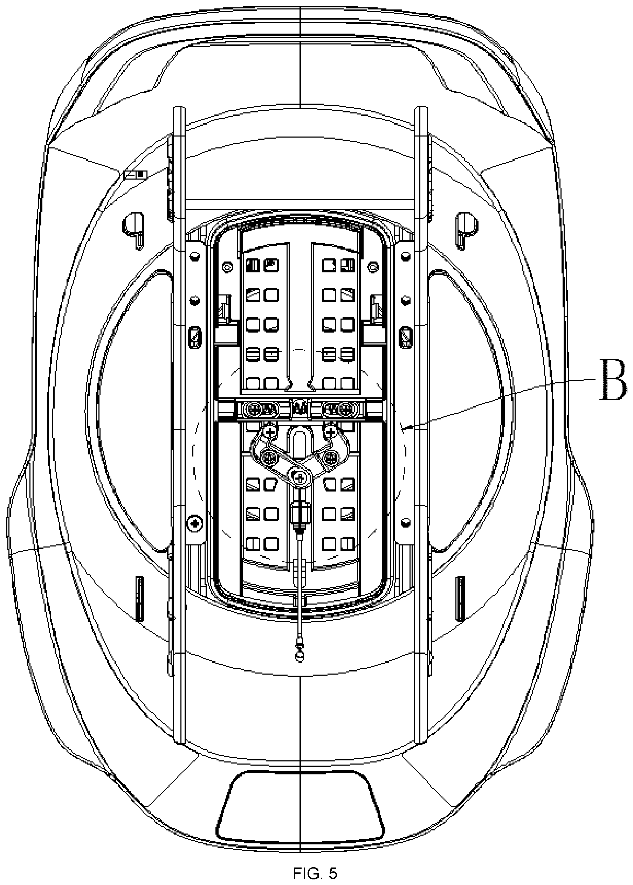

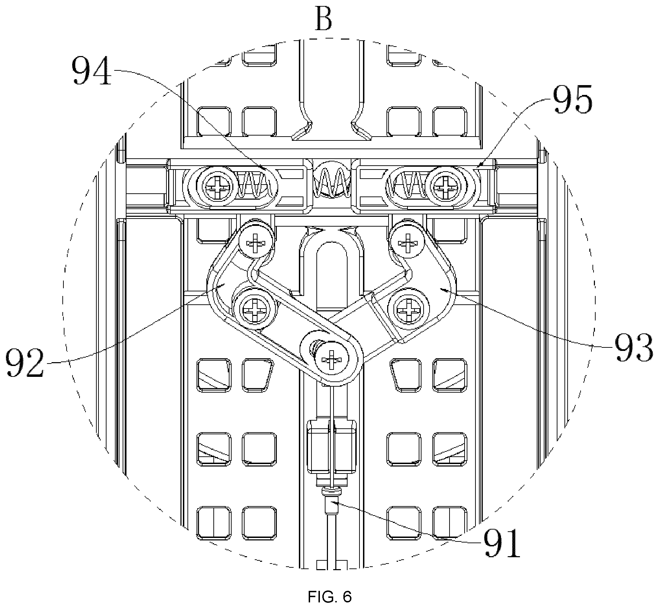

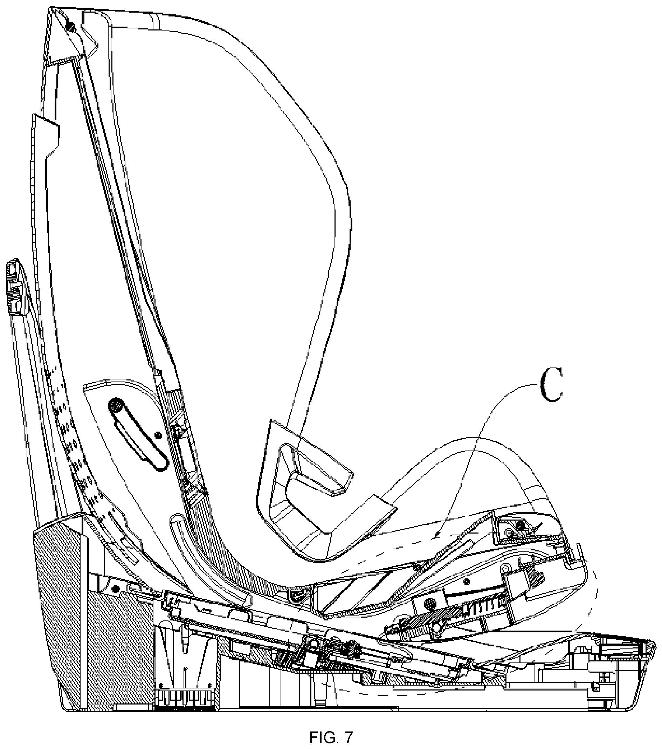

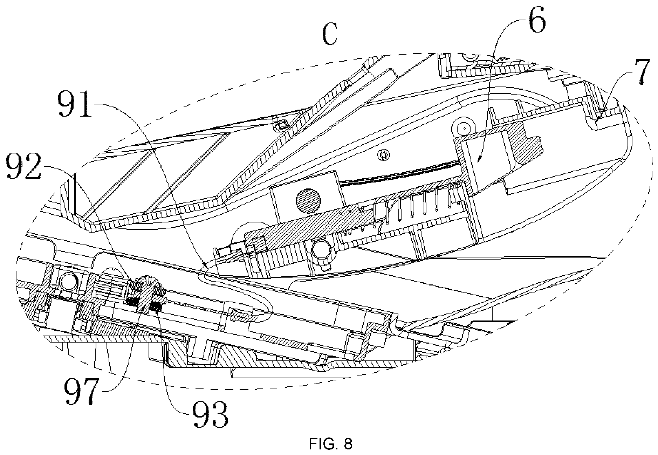

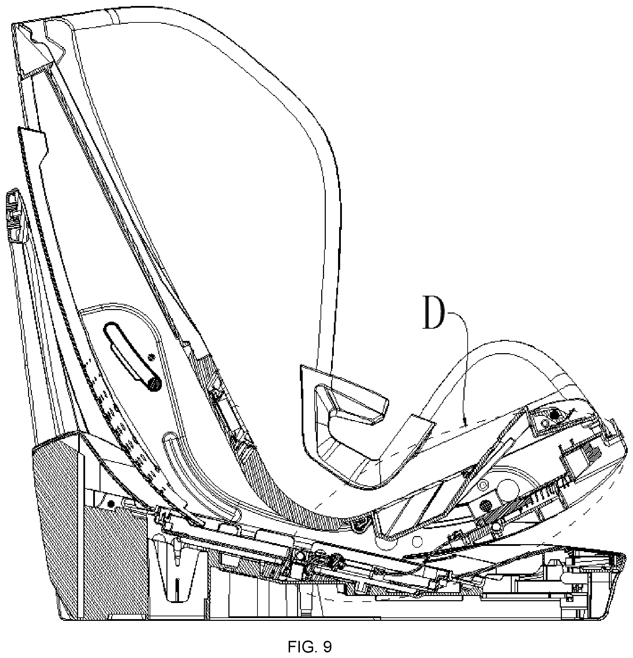

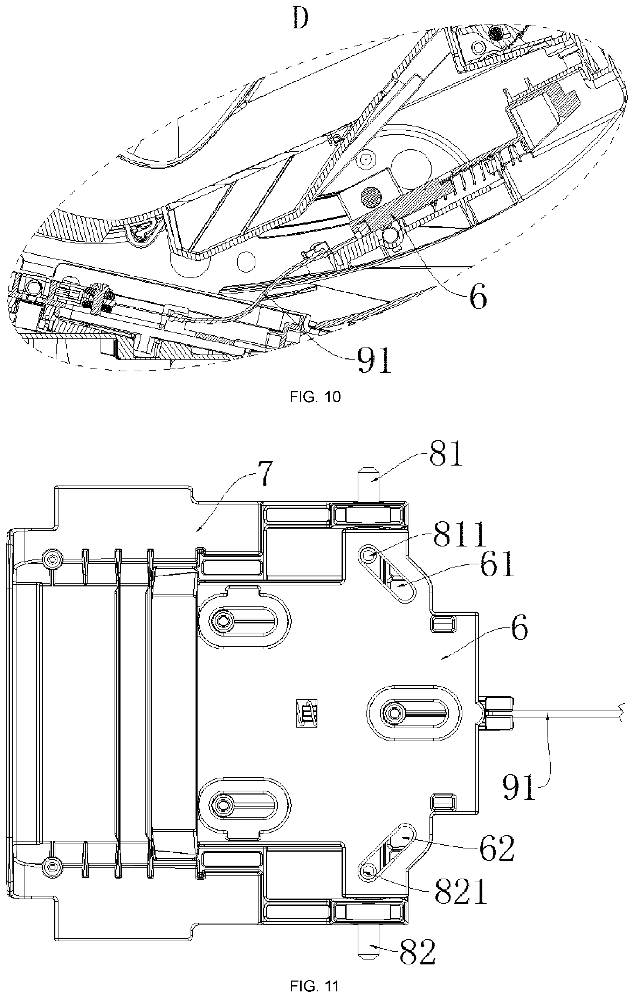

An embodiment of the present invention provides a structure capable of adjusting rotation of a rotating disk with one hand, as shown in FIGS. 1 to 10, the structure includes a base 1 and a rotating disk 2 that are rotatably connected to each other. A seat back 5 is mounted on the rotating disk 2, and an adjustment handle 6 is movably connected to the seat back 5. A rotation adjustment assembly 9 is mounted on the rotating disk 2, and the rotation adjustment assembly 9 includes a pull wire 91, a first rotating block 92, a second rotating block 93, a first rotating gear block 94 and a second rotating gear block 95. The base 1 is provided with a plurality of positioning gear slots 11 adapted for cooperating with the first rotating gear block 94 and the second rotating gear block 95, an end of the first rotating block 92 is hingedly connected to the first rotating gear block 94, and an end of the second rotating block 93 is hingedly connected to the second rotating gear block 95, the other end of the first rotating block 92 is hingedly connected to the other end of the second rotating block 93, a position where the first rotating block 92 is hingedly connected to the second rotating block 93 is connected to an end of the pull wire 91, and the other end of the pull wire 91 is connected to the adjustment handle 6. When the adjustment handle 6 is pulled and the pull wire 91 is driven to move with one hand, the end of the first rotating block 92 and the end of the second rotating block 93 approach each other to drive the first rotating gear block 94 and the second rotating gear block 95 to disengage from the positioning gear slots 11 respectively, and when the single hand continues to apply a rotational force to the adjustment handle 6, the seat back 5 is driven to rotate.

The base 1 has an axis that allows the rotating disk 2 to rotate 360°, and the seat back 5 fixedly mounted on the rotating disk 2 can rotate 360° relative to the base 1 along with the rotating disk 2 without idling, thereby improving the user's operating experience. The adjustment handle 6 is able to move forward and backward relative to the seat back 5, when the adjustment handle 6 is pulled to move forward by the operator with one hand relative to the seat back 5, the pull wire 91 also moves forward, and the pull wire 91 drives the first rotating block 92 and the second rotating block 93 to rotate relative to each other around the hinge part, so that the end of the first rotating block 92 connected to the first rotating gear block 94 and the end of the second rotating block 93 connected to the second rotating gear block 95 move close to each other, driving the first rotating gear block 94 and the second rotating gear block 95 to retract and approach each other in a left and right direction of the rotating disk 2, so that the first rotating gear block 94 and the second rotating gear block 95 are disengaged from the positioning gear slots 11, thereby releasing the rotation function of the seat back 5. The operator continues to apply a rotational force on the adjustment handle 6 without taking the hand off the adjustment handle 6 to push the seat back 5 to rotate relative to the base 1. In this embodiment, the number of positioning gear slots 11 is four, which are divided into two groups. When the seat back 5 faces forward, the first rotating gear block 94 and the second rotating gear block 95 cooperate with the positioning gear slots 11 on the left and right respectively. When the seat back 5 faces left or right, the first rotating gear block 94 and the second rotating gear block 95 cooperate with the positioning gear slots 11 in the front and rear respectively. In addition, the number of positioning gear slots 11 may also be other even numbers. When the operator releases the adjustment handle 6, the adjustment handle 6 automatically resets under the action of the elastic member.

The structure capable of adjusting rotation of a rotating disk with one hand in the present embodiment utilizes the cooperation between the first rotating gear block 94 and the second rotating gear block 95 and the positioning gear slots 11 to lock the relative position between the seat back 5 and the base 1, the adjustment handle 6 connected with the pull wire 91 is provided on the seat back 5, and the pull wire 91 is connected to the first rotating block 92 for driving the first rotating gear block 94 to move and the second rotating block 93 for driving the second rotating gear block 95 to move. When the operator pulls the adjustment handle 6 with one hand, the pull wire 91 is moved to eventually drive the first rotating gear block 94 and the second rotating gear block 95 to disengage from the positioning gear slots 11, thereby realizing the unlocking of the rotation function of the seat back 5. The operator can continue to apply a rotational force to the adjustment handle 6 with one hand to drive the seat back 5 to rotate relative to the base 1. The unlocking and rotation of the seat back 5 can be achieved with a single hand, resulting in a convenient operation and a simple structure, which is stable and reliable.

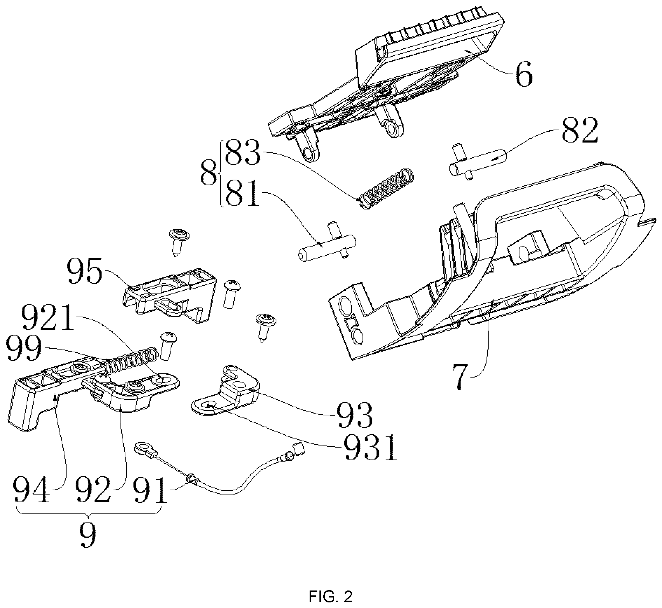

Optionally, in combination with FIG. 2, the first rotating block 92 and the second rotating block 93 are both L-shaped structures. This ensures that when the first rotating block 92 and the second rotating block 93 are driven by the pull wire 91 to rotate relative to each other, the first rotating gear block 94 and the second rotating gear block 95 can be driven to smoothly approach each other, thereby achieving smooth release of the seat back 5 from the base 1.

Optionally, in combination with FIGS. 1 to 6, the rotation adjustment assembly 9 also includes one first locking shaft 97 and two second locking shafts 98, the first rotating block 92 is provided with a first slotted hole 921, the second rotating block 93 is provided with a second slotted hole 931, the first slotted hole 921 and the second slotted hole 931 are hingedly connected to each other through the first locking shaft 97. The first rotating gear block 94 is provided with a third slotted hole 941, the second rotating gear block 95 is provided with a fourth slotted hole 951, the third slotted hole 941 is hingedly connected to the first rotating block 92 through one of the second locking shafts 98, and the fourth slotted hole 951 is hingedly connected to the second rotating block 93 through the other one of the second locking shafts 98.

The first slotted hole 921, the second slotted hole 931, the third slotted hole 941 and the fourth slotted hole 951 all have a certain length, the first locking shaft 97 is movable in the first slotted hole 921 and the second slotted hole 931 along a length direction of the first slotted hole 921 and the second slotted hole 931, and the two second locking shafts 98 are movable in the third slotted hole 941 and the fourth slotted hole 951 respectively along a length direction of the third slotted hole 941 and the fourth slotted hole 951, ensuring that the first rotating gear block 94 and the second rotating gear block 95 can move smoothly relative to the rotating disk 2. An end of the pull wire 91 is connected and fixed to the first locking shaft 97. Two rotating shafts are provided on the rotating disk 2, and the two rotating shafts are respectively rotatably connected to the first rotating block 92 and the second rotating block 93, and are connected and fixed by screws to limit the relative positions between the first rotating block 92 and the second rotating block 93 and the rotating disk 2, so that the linkage movement in the rotation adjustment assembly 9 is more stable and reliable. The above-mentioned screws are arranged at a middle position of the first rotating block 92 and a middle position of the second rotating block 93, respectively.

Optionally, in combination with FIGS. 1 to 6, the rotating disk 2 is provided with a sliding groove 21 in sliding engagement with the first rotating gear block 94 and the second rotating gear block 95, a first elastic member 99 is mounted in the sliding groove 21, and the two ends of the first elastic member 99 are respectively connected to the first rotating gear block 94 and the second rotating gear block 95.

The first elastic member 99 is a compression spring. When the pull wire 91 is pulled forward by the adjustment handle 6, the first rotating gear block 94 and the second rotating gear block 95 approach each other in the left and right direction of the rotating disk 2 and compress the first elastic member 99. When a desired rotational position is reached and the pulling force on the pull wire 91 is removed, the first rotating gear block 94 and the second rotating gear block 95 automatically move away from each other under the elastic force of the first elastic member 99, so that the first rotating gear block 94 and the second rotating gear block 95 are able to cooperate and be engaged with the positioning gear slots 11 again, resulting in a simple and reliable structure.

Optionally, in combination with FIGS. 1 to 6, the first rotating gear block 94 is provided with a fifth slotted hole 942, the second rotating gear block 95 is provided with a sixth slotted hole 952, and the rotation adjustment assembly 9 further includes two screws 96 that in sliding engagement with the fifth slotted hole 942 and the sixth slotted hole 952 respectively, and the first rotating gear block 94 and the second rotating gear block 95 are respectively connected to the rotating disk 2 through the screws 96.

The fifth slotted hole 942 and the sixth slotted hole 952 have a certain length, and a length direction thereof coincide with the left and right direction of the rotating disk 2. The screws 96 are capable of limiting an upward and downward movement of the first rotating gear block 94 and the second rotating gear block 95, ensuring that the first rotating gear block 94 and the second rotating gear block 95 are movable along a certain direction. With the connection of the pull wire 91, the first rotating block 92 and the second rotating block 93 are driven to rotate by the adjustment handle 6, and the first rotating gear block 94 and the second rotating gear block 95 are respectively driven to move leftward and rightward in a translational movement by the first rotating block 92 and the second rotating block 93. The first elastic member 99 located between the first rotating gear block 94 and the second rotating gear block 95 is configured for resetting, which ensures a 360° rotation at any angular position.

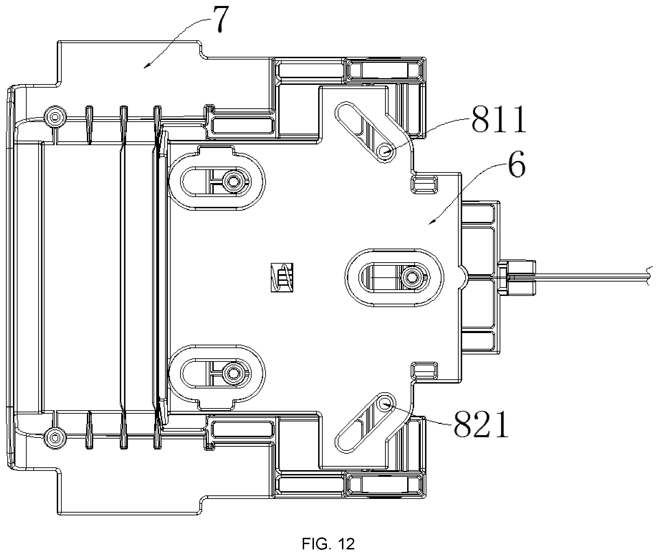

Optionally, in combination with FIGS. 1, 2, and 7-12, further provided are slide rail fixed plates 3 connected to the rotating disk 2 and a handle fixing base 7 connected to the seat back 5. The seat back 5 is slidably connected to the slide rail fixed plates 3, the adjustment handle 6 is movably connected to the handle fixing base 7, the handle fixing base 7 is mounted with an angle adjustment assembly 8 for locking or unlocking a relative angular position between the seat back 5 and the slide rail fixed plates 3. The angle adjustment assembly 8 is respectively connected to the adjustment handle 6 and the slide rail fixed plates 3, and the adjustment handle 6 moves relative to the handle fixing base 7 to drive the angle adjustment assembly 8 to lock or unlock the relative angular position between the seat back 5 and the slide rail fixed plates 3.

The slide rail fixed plates 3 are fixedly connected to the rotating disk 2 by screws, that is, the slide rail fixed plates 3 are able to rotate synchronously with the rotating disk 2. An outer sheath of the pull wire 91 is fixed on the rotating disk 2 and the handle fixing base 7, and the pull wire 91 is able to move freely within the outer sheath. The handle fixing base 7 is connected and fixed to the seat back 5 by screws, and the adjustment handle 6 is fixed on the handle fixing base 7 and is able to move forward and backward relative to the handle fixing base 7. When the adjustment handle 6 is pulled forward relative to the seat back 5, in addition to driving the rotation adjustment assembly 9 to unlock the rotation function of the rotating disk 2, it also drives the angle adjustment assembly 8 to move, so that the seat back 5 is released from the slide rail fixed plates 3, and the seat back 5 can be pushed with one hand to adjust the angle in the front and rear direction relative to the slide rail fixed plates 3. This realizes the angle adjustment function of the seat back 5 with one hand, which is more convenient to operate and has diversified functions.

Optionally, in combination with FIGS. 1, 2, and 7-12, the angle adjustment assembly 8 includes a first gear pin 81 and a second gear pin 82 mounted on the handle fixing base 7. The first gear pin 81 is provided with a first vertical rod 811, the second gear pin 82 is provided with a second vertical rod 821, the adjustment handle 6 is provided with a first inclined groove 61 in sliding engagement with the first vertical rod 811 and a second inclined groove 62 in sliding engagement with the second vertical rod 821, and the slide rail fixed plates 3 are provided with a plurality of gear holes 31 respectively adapted for cooperating with the first gear pin 81 and the second gear pin 82.

When the first gear pin 81 and the second gear pin 82 are respectively locked with the gear holes 31, the first gear pin 81 and the second gear pin 82 are in an extended state relative to the handle fixing base 7. At this moment, the first vertical rod 811 is located at a front end position in the first inclined groove 61, and the second vertical rod 821 is located at a front end position in the second inclined groove 62. When the adjustment handle 6 is pulled forward, the first vertical rod 811 moves to a rear end of the first inclined groove 61 and the second vertical rod 821 moves to a rear end of the second inclined groove 62, so that the first gear pin 81 and the second gear pin 82 are retracted inwardly into the handle fixing base 7 and disengaged from the gear holes 31, thereby unlocking the relative angular position between the seat back 5 and the slide rail fixed plates 3. When a force is applied to the handle fixing base 7 in the front and rear direction with one hand, the seat back 5 can be pushed to adjust the angle relative to the slide rail fixed plates 3, allowing a smoother and quieter angle adjustment operation. The rear end of the first inclined groove 61 and the rear end of the second inclined groove 62 are close to each other, and the front end of the first inclined groove 61 and the front end of the second inclined groove 62 are further away from each other. Corresponding grooves are provided on the handle fixing base 7, and the first shift pin 81 and the second shift pin 82 are movable on the handle fixing base 7 in the left and right direction through the grooves.

Optionally, in combination with FIGS. 1, 2, and 7-12, the angle adjustment assembly 8 includes a second elastic member 83, and the two ends of the second elastic member 83 are respectively connected to the first gear pin 81 and the second gear pin 82. The second elastic member 83 is a compression spring, and when the relative angle position between the seat back 5 and the slide rail fixed plates 3 is in an unlocked state, the second elastic member 83 is in a compressed state. When the operator releases the adjustment handle 6, the elastic force of the second elastic member 83 pushes the first gear pin 81 and the second gear pin 82 to automatically reset and engage with the gear holes 31, ensuring a more reliable structure.

Optionally, in combination with FIGS. 1, 2, and 7-10, the seat back 5 is connected to sliding shafts 4, and the slide rail fixed plates 3 are provided with arc-shaped slide rails 32 slidably connected to the sliding shafts 4.

Each arc-shaped slide rails 32 has a certain length to allow the angle adjustment to the seat back 5. The seat back 5 is slidably connected to the slide rail fixed plates 3 through the sliding shafts 4. When the operator pulls the adjustment handle 6, the adjustment handle 6 moves forward and drives the first gear pin 81 and the second gear pin 82 to retract inward through the first inclined groove 61 and the second inclined groove 62 respectively, so that the first gear pin 81 and the second gear pin 82 are separated from the gear holes 31 on the slide rail fixed plates 3. After this, the angle of the seat back 5 can be adjusted. When a desired position is reached, the first gear pin 81 and the second gear pin 82 quickly enter the holes under the force of the second elastic member 83, thereby completing the angle adjustment to the seat back 5. When the operator pulls the adjustment handle 6, the adjustment handle 6 further pulls the pull wire 91 and drives the first rotating block 92 and the second rotating block 93 to rotate, which in turn drives the inward translational movement of the first rotating gear block 94 and the second rotating gear block 95 and compresses the first elastic member 99, so that the first rotating gear block 94 and the second rotating gear block 95 are disengaged from the positioning gear slots 11. At this point, the operator can rotate and adjust the position of the seat back 5. When a desired position is reached, the adjustment handle 6 is released, and the first rotating gear block 94 and the second rotating gear block 95 quickly enter the corresponding positions under the force of the first elastic member 99, so as to complete the rotation adjustment. With the connection through the pull wire 91, the angle adjustment of the seat back 5 can be achieved at any rotational angle of the seat back 5.

Another embodiment of the present invention provides a child safety seat, including the above-mentioned structure capable of adjusting rotation of a rotating disk with one hand.

The child safety seat in this embodiment utilizes the first rotating gear block 94 and the second rotating gear block 95 to cooperate with the positioning gear slots 11 so as to lock the relative position between the seat back 5 and the base 1, and the adjustment handle 6 connected with the pull wire 91 is provided on the seat back 5. The pull wire 91 is connected to the first rotating block 92 for driving the first rotating gear block 94 to move and the second rotating block 93 for driving the second rotating gear block 95 to move. The operator pulls the adjustment handle 6 with one hand to move the pull wire 91 and eventually drive the first rotating gear block 94 and the second rotating gear block 95 to disengage from the positioning gear slots 11, thereby realizing the release of the rotation function of the seat back 5. The operator continues to apply a rotational force to the adjustment handle 6 with one hand to drive the seat back 5 to rotate relative to the base 1. This allows the release and rotation of the seat back 5 with a single hand, resulting in a convenient operation and a simple structure, which is stable and reliable.

Although the disclosure is described above, the protection scope of the present disclosure is not limited thereto. A person skilled in the art may make various changes and modifications without departing from the spirit and scope of the disclosure, and these changes and modifications fall within the protection scope of the present invention.

## Claims

1. A structure capable of adjusting rotation of a rotating disk with one hand, **characterized in that** it comprises a base (1) and a rotating disk (2) that are rotatably connected to each other, a seat back (5) is mounted on the rotating disk (2), an adjustment handle (6) is movably connected to the seat back (5), a rotation adjustment assembly (9) is mounted on the rotating disk (2), and the rotation adjustment assembly (9) comprises a pull wire (91), a first rotating block (92), a second rotating block (93), a first rotating gear block (94) and a second rotating gear block (95), the base (1) is provided with a plurality of positioning gear slots (11) adapted for cooperating with the first rotating gear block (94) and the second rotating gear block (95), an end of the first rotating block (92) is hingedly connected to the first rotating gear block (94), and an end of the second rotating block (93) is hingedly connected to the second rotating gear block (95), the other end of the first rotating block (92) is hingedly connected to the other end of the second rotating block (93), a position where the first rotating block (92) is hingedly connected to the second rotating block (93) is connected to an end of the pull wire (91), and the other end of the pull wire (91) is connected to the adjustment handle (6), when the adjustment handle (6) is pulled and the pull wire (91) is driven to move with one hand, the end of the first rotating block (92) and the end of the second rotating block (93) approach each other to drive the first rotating gear block (94) and the second rotating gear block (95) to disengage from the positioning gear slots (11) respectively, and the seat back (5) is driven to rotate when the one hand continues to apply a rotational force to the adjustment handle (6).

2. The structure capable of adjusting rotation of a rotating disk with one hand as claimed in claim 1, **characterized in that** the first rotating block (92) and the second rotating block (93) are both L-shaped structures.

3. The structure capable of adjusting rotation of a rotating disk with one hand as claimed in claim 1, **characterized in that** the rotation adjustment assembly (9) further comprises one first locking shaft (97) and two second locking shafts (98), the first rotating block (92) is provided with a first slotted hole (921), the second rotating block (93) is provided with a second slotted hole (931), and the first slotted hole (921) is hingedly connected to the second slotted hole (931) through the first locking shaft (97), the first rotating gear block (94) is provided with a third slotted hole (941), the second rotating gear block (95) is provided with a fourth slotted hole (951), the third slotted hole (941) is hingedly connected to the first rotating block (92) through one of the two second locking shafts (98), and the fourth slotted hole (951) is hingedly connected to the second rotating block (93) through the other one of the two second locking shafts (98).

4. The structure capable of adjusting rotation of a rotating disk with one hand as claimed in claim 1, **characterized in that** the rotating disk (2) is provided with a sliding groove (21) slidably connected to the first rotating gear block (94) and the second rotating gear block (95), a first elastic member (99) is mounted in the sliding groove (21), and two ends of the first elastic member (99) are respectively connected to the first rotating gear block (94) and the second rotating gear block (95).

5. The structure capable of adjusting rotation of a rotating disk with one hand as claimed in claim 1, **characterized in that** the first rotating gear block (94) is provided with a fifth slotted hole (942), the second rotating gear block (95) is provided with a sixth slotted hole (952), the rotating adjustment assembly (9) further comprises two screws (96) in sliding engagement with the fifth slotted hole (942) and the sixth slotted hole (952) respectively, the first rotating gear block (94) and the second rotating gear block (95) are respectively connected to the rotating disk (2) through the screws (96).

6. The structure capable of adjusting rotation of a rotating disk with one hand as claimed in any one of claims 1 to 5, **characterized in that** it further comprises slide rail fixed plates (3) connected to the rotating disk (2) and a handle fixing base (7) connected to the seat back (5), the seat back (5) is slidably connected to the slide rail fixed plates (3), the adjustment handle (6) is movably connected to the handle fixing base (7), the handle fixing base (7) is mounted with an angle adjustment assembly (8) for locking or unlocking a relative angular position between the seat back (5) and the slide rail fixed plates (3), the angle adjustment assembly (8) is respectively connected to the adjustment handle (6) and the slide rail fixed plates (3), and the adjustment handle (6) moves relative to the handle fixing base (7) to drive the angle adjustment assembly (8) to lock or unlock the relative angular position between the seat back (5) and the slide rail fixed plates (3).

7. The structure capable of adjusting rotation of a rotating disk with one hand as claimed in claim 6, **characterized in that** the angle adjustment assembly (8) comprises a first gear pin (81) and a second gear pin (82) mounted on the handle fixing base (7), the first gear pin (81) is provided with a first vertical rod (811), the second gear pin (82) is provided with a second vertical rod (821), the adjustment handle (6) is provided with a first inclined groove (61) in sliding engagement with the first vertical rod (811) and a second inclined groove (62) in sliding engagement with the second vertical rod (821), and the slide rail fixed plates (3) are provided with a plurality of gear holes (31) respectively adapted for cooperating with the first gear pin (81) and the second gear pin (82).

8. The structure capable of adjusting rotation of a rotating disk with one hand as claimed in claim 7, **characterized in that** the angle adjustment assembly (8) comprises a second elastic member (83), and two ends of the second elastic member (83) are respectively connected to the first gear pin (81) and the second gear pin (82).

9. The structure capable of adjusting rotation of a rotating disk with one hand as claimed in claim 6, **characterized in that** the seat back (5) is connected with sliding shaft(s) (4), and the slide rail fixed plates (3) are provided with arc-shaped slide rails (32) slidably connected to the sliding shaft(s) (4).

10. A child safety seat, **characterized in that** it comprises the structure capable of adjusting rotation of a rotating disk with one hand as claimed in any one of claims 1 to 9.
